# EUROPEAN PATENT APPLICATION

(11) **EP 3 793 233 A1**
(43) Date of publication of application: **17.03.2021**
(21) Application number: 20199611.3
(22) Date of filing: 25.07.2017
(51) Int. Cl.: H04W 12/069, H04W 12/02

(54) **NETWORK ACCESS AUTHENTICATION PROCESSING METHOD AND DEVICE**

(30) Priority: 12.09.2016 CN 201610821823
(62) Divisional of application: 17848014.1
(71) Applicant: ZTE Corporation, Shenzhen, Guangdong 518057 (CN)
(72) Inventor: YOU, Shilin, Shenzhen, Guangdong 518057 (CN); CAI, Jiyan, Shenzhen, Guangdong 518057 (CN); LIANG, Shuang, Shenzhen, Guangdong 518057 (CN); PENG, Jin, Shenzhen, Guangdong 518057 (CN); LIN, Zhaoji, Shenzhen, Guangdong 518057 (CN); ZHAO, Xiaowu, Shenzhen, Guangdong 518057 (CN)
(74) Representative: Vossius & Partner Patentanwälte Rechtsanwälte mbB

(57) **Abstract**

Embodiments of the prevent invention provide a network access authentication processing method and device. The method comprises: receiving a confirmation message sent by a user equipment, the confirmation message carrying a first signature token generated by the user equipment according to a first initial enhanced privacy mobile identification PMSI; verifying whether the first signature token is valid; and if the first signature token is invalid, obtaining the PMSI to perform network access authentication on the user equipment. The embodiments of the present invention can resolve the problem that a network access process in the related art does not provide a processing method in a home network to deal with failure of signature verification.

## Description

### TECHNICAL FIELD

The present disclosure relates to the field of communications, and more particularly, to a network access authentication processing method and device.

### BACKGROUND

Mobile communication has developed rapidly in more than 20 years, which has brought huge impacts on people's lifestyle and style of work, social politics, economy, and other aspects. Human society has entered an era of efficient information, and the demand for business applications in all aspects has exploded. It will bring huge challenges to the future wireless mobile bandwidth system in terms of frequency, technology and operation.

In addition to providing services for everyone's communication, future mobile network will provide access services for more and more terminals of Internet of Things. Internet of Things access brings new challenges and opportunities to mobile networks. Different types of Internet of Things have different needs for the network. Some require the network to provide high real-time and high-reliability services, such as telemedicine, while others require regular services of small amount of data transmission, such as remote meter reading systems. For different business needs, mobile networks need to be properly optimized to meet business needs. More and more different optimization requirements are proposed for the mobile networks by more and more Internet of Things, some of them may be contradictory. Therefore, a converged core network is increasingly unable to meet the demands of various Internet of Things.

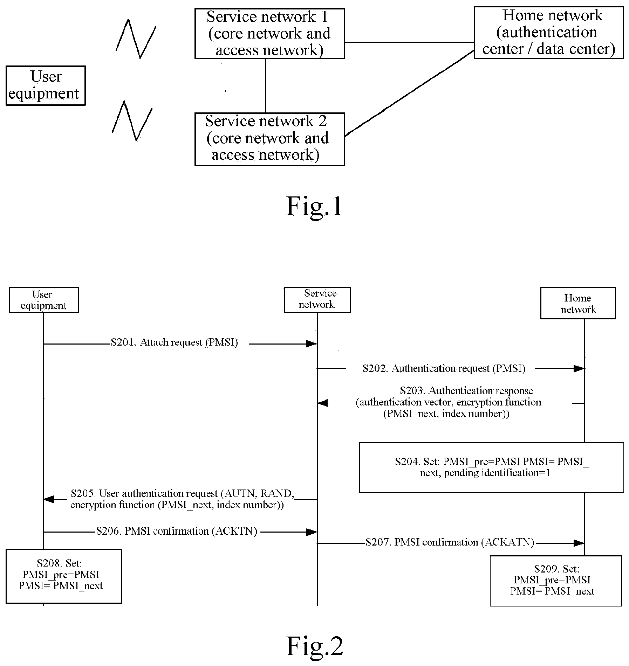

With the continuous upgrading of the network and the emergence of 5G technology, the privacy protection requirements for the network are exigent. Fig. 1 is a schematic diagram of accessing the future 5G network in the related art. As shown in Fig. 1, the user equipment completes initial registration in the service network 1, and the service network 1 obtains an authentication certification vector and user subscription data from the home network of the user equipment, and the service network 1 completes mutual authentication with the user equipment, and then the user equipment may attach to the service network 2 and then perform related data services. The service network 1 and the service network 2 both include an access network and a core network, and the home network includes a user data center/authentication certification center.

Fig. 2 is a schematic diagram of a flow that user equipment accesses a service network with an International Mobile Subscriber Identification Number (IMSI) to protect the user's privacy, in which the IMSI of the user, the initial Privacy enhanced Mobile Subscriber Identifier (PMSI) and the corresponding Kpmsi are saved in both the user equipment and the home network, and both IMSI and PMSI have the same Mobile Country Code (MCC) and Mobile Network Code (MNC).

In S201, the user equipment initiates an attach request message which carries a PMSI.

In S202, the service network queries the corresponding home network according to the MCC and MNC of the PMSI, and then sends an authentication certification request message which carries the PMSI to the home network.

In S203, the home network finds the corresponding IMSI according to the PMSI, generates a corresponding security vector, and then generates a next attached PMSI_next, where the PMSI_next=MCC|MNC| intercept function (hash function (Kpmsi, PMSI), *n*), Kpmsi is a hash key, and *n* is an interception length. Since PMSI_next may be the same as a PMSI of other user equipment, a hash number is added as the index number, the index number is counted from 0, and an authentication certification response message is sent to the service network. The authentication certification response message carries a security vector and an encrypted PMSI_next, where the encrypted PMSI_next=encryption function (PMSI_next|index number, K1), K1 is the encryption key K1 for encrypting the PMSI_next by the home network, K1=key generation function (Kpmsi, RAND), and RAND is a random number in the authentication vector.

In S204, the home network device sets: PMSI_pre=PMSI, PMSI= PMSI next, and pending identification=1, wherein pending identification=1 means the PMSI is invalid while the PMSI_pre is valid at current.

In S205, the service network sends to the user equipment a user authentication request message, where the message carries an authentication token (AUTN) in the authentication vector, which is used to authenticate the network by the user equipment, and the message also carries a random number RAND and an encrypted PMSI_next.

In S206, after the user equipment succeeds in AUTN authentication, it acquires K1 in the same way as the home network does, decrypts the encrypted PMSI next, and calculates the PMSI next using the K2 signature, the signature token ACKTN=signature function (PMSI_next | index number, K2), where K2=key generating function (Kpmsi, signature authentication K), the signature authentication K is also stored in the user equipment and in the home network individually, and the user equipment sends a PMSI confirmation message carrying ACKTN to the service network.

In S207, the service network forwards the PMSI confirmation message carrying ACKTN to the home network.

In S208, the user equipment device sets: PMSI_pre=PMSI, PMSI= PMSI next, and the user equipment registers with PMSI if it needs to register with PMSI next time.

In S209, the home network uses the same calculation method as the user equipment does to verify the validity of the ACKTN signature token, and sets PMSI_pre=PMSI, PMSI= PMSI_next, pending identification=0, where pending identification=0 means the PMSI is valid.

However, the network access process in the related art does not provide a processing method for the home network to deal with failure of ACKTN signature authentication.

### SUMMARY

The embodiments of the present disclosure provides a network access authentication processing method and device to at least solve the problem that a network access process in the related art does not provide a processing method for the home network to deal with failure of signature authentication.

According to an embodiment of the present disclosure, there is provided a network access authentication processing method, including: receiving a confirmation message sent by user equipment, the confirmation message carrying a first signature token generated by the user equipment according to a first Privacy enhanced Mobile Subscriber Identifier (PMSI); verifying whether the first signature token is valid; and when the first signature token is invalid, obtaining the PMSI to perform network access authentication on the user equipment.

In the embodiments of the present disclosure, obtaining the PMSI to perform the network access authentication on the user equipment includes: sending a message of first signature token failed authentication to the user equipment, and notifying the user equipment to re-initiate an attach request; and re-obtaining the first PMSI based on the attach request to perform the network access authentication on the user equipment.

In the embodiments of the present disclosure, obtaining the PMSI to perform the network access authentication on the user equipment includes: generating a second PSMI according to the first PMSI and sending the second PSMI to the user equipment; based on a feedback from the user equipment, obtaining a second signature token generated by the user equipment according to the second PSMI; and re-performing the network access authentication on the user equipment via verifying whether the second signature token is valid.

In the embodiments of the present disclosure, re-performing network access authentication on the user equipment via verifying whether the second signature token is valid includes: verifying whether the second signature token is valid; if the second signature token is invalid, sending a message of second signature token failed authentication to the user equipment and a service network, and notifying the user equipment that the second signature token is invalid; and if the second signature token is valid, performing attach processing on the user equipment using the second PSMI instead of the first PMSI.

In the embodiments of the present disclosure, before receiving the confirmation message sent by the user equipment, the method further includes: receiving an attach request sent by the user equipment, the attach request carrying a first PMSI and the first PMSI including a user data center identification; generating an encrypted first PMSI by a user data center corresponding to the user data center identification; and sending the encrypted first PMSI to the user equipment, the encrypted first PMSI being used to generate the first signature token.

In the embodiments of the present disclosure, before receiving the confirmation message sent by the user equipment, the method further includes: obtaining the PMSI by means of hashing an International Mobile Subscriber Identification number (IMSI) using a hash function.

In the embodiments of the present disclosure, receiving the confirmation message sent by the user equipment includes: receiving a location update request sent by a service network, the location update request carrying the first signature token forwarded to the service network by the user equipment.

According to another embodiment of the present disclosure, there is provided a network access authentication processing device, including: a first receiving module configured to receive a confirmation message sent by user equipment, the confirmation message carrying a first signature token generated by the user equipment according to a first Privacy enhanced Mobile Subscriber Identifier (PMSI); a verifying module configured to verify whether the first signature token is valid; and a first obtaining module configured to, when the first signature token is invalid, obtain the PMSI to perform network access authentication on the user equipment.

In the embodiments of the present disclosure, the first obtaining module is further configured to send a message of first signature token failed authentication to the user equipment, and notify the user equipment to re-initiate an attach request; and re-obtain the first PMSI based on the attach request to perform the network access authentication on the user equipment.

In the embodiments of the present disclosure, the first obtaining module is further configured to generate a second PSMI according to the first PMSI and send the second PSMI to the user equipment; based on a feedback from the user equipment, obtain a second signature token generated by the user equipment according to the second PSMI; and re-perform the network access authentication on the user equipment via verifying whether the second signature token is valid.

In the embodiments of the present disclosure, the first obtaining module is further configured to verify whether the second signature token is valid; if the second signature token is invalid, send a message of second signature token failed authentication to the user equipment and a service network, and notifying the user equipment that the second signature token is invalid; and if the second signature token is valid, perform attach processing on the user equipment using the second PSMI instead of the first PMSI.

In the embodiments of the present disclosure, the device further includes: a second receiving module configured to receive an attach request sent by the user equipment, the attach request carrying a first PMSI which includes a user data center identification; a generating module configured to generate an encrypted first PMSI by a user data center corresponding to the user data center identification; and a sending module configured to send the encrypted first PMSI to the user equipment, wherein the encrypted first PMSI is used to generate the first signature token.

In the embodiments of the present disclosure, the device further includes: a second obtaining module configured to obtain the PMSI by means of hashing an International Mobile Subscriber Identification number (IMSI) using a hash function.

In the embodiments of the present disclosure, the first receiving module is further configured to receive a location update request sent by a service network, the location update request carrying the first signature token forwarded to the service network by the user equipment.

According to another embodiment of the present disclosure, there is provided a storage medium configured to store the program code which executes the following steps: receiving a confirmation message sent by user equipment, the message carrying a first signature token generated by the user equipment according to a first Privacy enhanced Mobile Subscriber Identifier (PMSI); verifying whether the first signature token is valid; and when the first signature token is invalid, obtaining the PMSI to perform network access authentication on the user equipment.

In the embodiments of the present disclosure, the storage medium is further configured to store the program code which executes the following steps: obtaining the PMSI to perform the network access authentication on the user equipment includes: sending a message of first signature token failed authentication to the user equipment, and notifying the user equipment to re-initiate an attach request; and re-obtaining the first PMSI according to the attach request to perform the network access authentication on the user equipment.

In the embodiments of the present disclosure, the storage medium is further configured to store the program code which executes the following steps: obtaining the PMSI to perform the network access authentication on the user equipment includes: generating a second PSMI according to the first PMSI and sending the second PSMI to the user equipment; based on a feedback from the user equipment, obtaining a second signature token generated by the user equipment according to the second PSMI; and re-performing the network access authentication on the user equipment via verifying whether the second signature token is valid.

In the embodiments of the present disclosure, the storage medium is further configured to store the program code which executes the following steps: re-performing the network access authentication on the user equipment via verifying whether the second signature token is valid includes: verifying whether the second signature token is valid; if the second signature token is invalid, sending a message of second signature token failed authentication to the user equipment and a service network, and notifying the user equipment that the second signature token is invalid; and if the second signature token is valid, performing attach processing on the user equipment using the second PSMI instead of the first PMSI.

In the embodiments of the present disclosure, the storage medium is further configured to store the program code which executes the following steps: before receiving the confirmation message sent by the user equipment, the method further includes: receiving an attach request sent by the user equipment, the attach request carrying a first PMSI which includes a user data center identification; generating an encrypted first PMSI by a user data center corresponding to the user data center identification; and sending the encrypted first PMSI to the user equipment, wherein the encrypted first PMSI is used to generate the first signature token.

In the embodiments of the present disclosure, the storage medium is further configured to store the program code which executes the following steps: before receiving the confirmation message sent by the user equipment, including: obtaining the PMSI by means of hashing an International Mobile Subscriber Identification number (IMSI) using a hash function.

In the embodiments of the present disclosure, the storage medium is further configured to store the program code which executes the following steps: receiving the confirmation message sent by the user equipment, including: receiving a location update request sent by a service network, wherein the location update request carries the first signature token forwarded to the service network by the user equipment.

Through the embodiments of the present disclosure, a confirmation message sent by user equipment is received, the confirmation message carrying a first signature token generated by the user equipment according to a first privacy enhanced mobile subscriber identifier (PMSI); whether the first signature token is valid is verified; and if the first signature token is invalid, a PMSI is obtained to perform network access authentication on the user equipment. The PMSI is obtained to perform network access authentication on the user equipment under the circumstance that the first signature token is invalid, that is, the signature authentication is failed, thereby the problem that the network access process in the related art does not provide a processing method for the home network to deal with failure of signature authentication can be solved.

### BRIEF DESCRIPTION OF THE DRAWINGS

The accompanying drawings illustrated here serve to provide a further understanding of the present disclosure and constitute a part of the application, and the illustrative embodiments of the present disclosure together with the description thereof serve to explain the present disclosure, but do not constitute inappropriate definition to the present disclosure. In the drawings:
Fig. 1 is a schematic diagram of accessing the future 5G network in the related art;
Fig. 2 is a schematic diagram of a flow that user equipment accesses a service network with an International Mobile Subscriber Identification Number (IMSI)to protect the user's privacy;
Fig. 3 is a hardware structure diagram of a computer terminal adopting the network access authentication processing method according to the embodiments of the present disclosure;
Fig. 4 is a flow chart of the network access authentication processing method according to the embodiments of the present disclosure;
Fig. 5 is a schematic diagram of a flow of an International Mobile Subscriber Identification Number for protecting the user's privacy and a schematic diagram of a flow of processing failure of signature authentication according to the embodiments of the present disclosure;
Fig. 6 is a schematic diagram of a flow of an International Mobile Subscriber Identification Number for protecting the user's privacy and processing failure of signature authentication according to the embodiments of the present disclosure;
Fig. 7 is a structural diagram of the network access authentication processing device according to the embodiments of the present disclosure;
Fig. 8 is a preferred structural diagram of the network access authentication processing device according to the embodiments of the present disclosure; and
Fig. 9 is a preferred structural diagram of the network access authentication processing device according to the embodiments of the present disclosure.

### DETAILED DESCRIPTION

The present disclosure will be explained in detail with reference to the accompanying drawings and embodiments hereinafter. It should be noted that, in case of no conflict, the embodiments in the present application and the features in the embodiments may be combined with each other.

It should be noted that the terms "first", "second" and the like in the description and claims of the present disclosure as well as the above drawings are used to distinguish similar objects, and are not necessarily used to describe a specific sequence or a chronological order.

### First embodiment

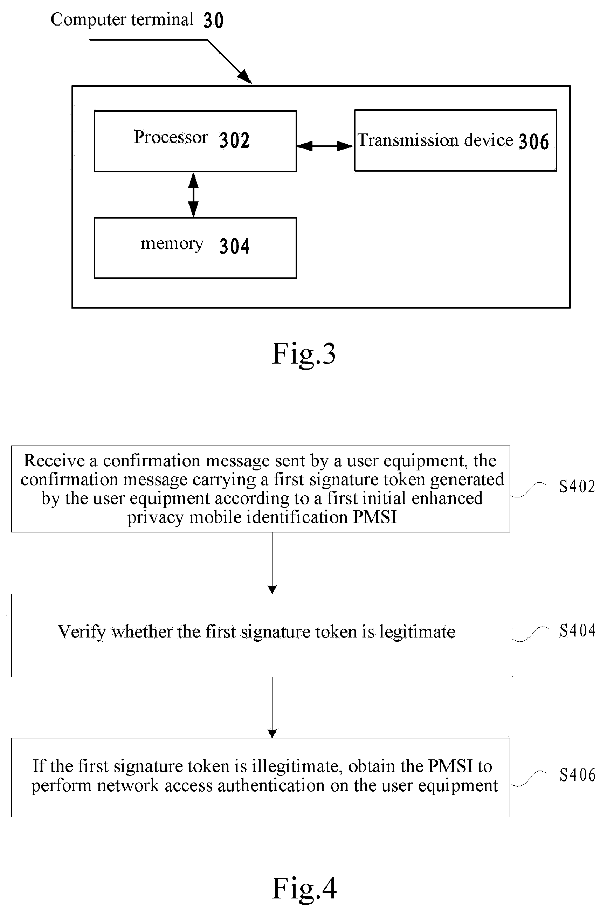

The method embodiment provided by the first embodiment of the present disclosure may be executed in a computer terminal or some arithmetical device like that. Taking running on a computer terminal for an example, Fig. 3 is a hardware structural diagram of a computer terminal implementing the network access authentication processing method according to the embodiments of the present disclosure. As shown in Fig. 3, the computer terminal 30 may include one or more (only one is shown in Fig. 3) processor 302, which may include, but is not limited to, a microprocessor (MPU), a field programmable gate array (FPGA) or other processing units, a memory 304 for storing data, and a transmission device 306 for communication. It is understandable for those skilled in the art that the structure shown in Fig. 3 is only illustrative, and do not constitute definition to the structure of the above electronic devices. For instance, the computer terminal 30 may include more or less components than those illustrated in Fig. 3, or has different configurations from those illustrated in Fig. 3.

The memory 304 may be used to store software programs and modules of the application software, such as the program instructions/modules corresponding to the network authentication processing method in the embodiments of the present disclosure, and the processor 302 performs various functional applications and data processing, that is, implements the above method, by running the software programs and modules stored in the memory 304. The memory 304 may include a high-speed random access memory and also a non-volatile memory, such as one or more magnetic storage devices, a flash memory, or other non-volatile solid state memory. In some examples, the memory 304 may further include memories remotely located relative to the processor 302, and these remote memories may be connected to the computer terminal 30 via a network. Examples of such network include, but are not limited to, the Internet, intranet, local area network, mobile communication network, and combinations thereof.

The transmission device 306 is arranged to receive or transmit data via a network. A specific example of the above network may include a wireless network provided by a communication provider of the mobile terminal 30. In one example, the transmission device 306 includes a Network Interface Controller (NIC) that may be connected to other network devices through a base station to communicate with the Internet. In one example, the transmission device 306 may be a Radio Frequency (RF) module for communicating with the Internet wirelessly.

The present embodiment provides a network access authentication processing method running on the above computer terminal. Fig. 4 is a flow chart of the network access authentication processing method according to the embodiment of the present disclosure. As shown in Fig.4, the flow includes the steps as follows.

In S402, a confirmation message sent by user equipment is received, the confirmation message carrying a first signature token generated by the user equipment according to a first Privacy enhanced Mobile Subscriber Identifier (PMSI).

In S404, it is verified whether the first signature token is valid.

In S406, if it is verified that the first signature token is invalid, the PMSI is obtained to perform network access authentication on the user equipment.

Through the above steps, the PMSI is obtained to perform network access authentication on the user equipment under the circumstance that the first signature token is invalid, that is, the signature authentication is failed, thereby the problem that the network access process in the related art does not provide a processing method for the home network to deal with failure of signature authentication can be solved.

In the embodiments of the present disclosure, obtaining the PMSI to perform network access authentication on the user equipment includes: sending a message of first signature token failed authentication to the user equipment, and notifying the user equipment to re-initiate an attach request; and re-obtaining the first PMSI according to the attach request to perform network access authentication on the user equipment. For example, after the signature token ACKTN authentication is failed, the home network sends a message of the failure of ACKTN authentication to the user equipment via a service network, and the user equipment uses the original PMSI to perform a re-attach process.

In the embodiments of the present disclosure, obtaining the PMSI to perform network access authentication on the user equipment includes: generating a second PSMI according to the first PMSI and sending the second PSMI to the user equipment; based on a feedback from the user equipment, obtaining a second signature token generated by the user equipment according to the second PSMI; and re-performing network access authentication process on the user equipment via verifying whether the second signature token is valid.

In the embodiments of the present disclosure, re-performing network access authentication process on the user equipment via verifying whether the second signature token is valid includes: verifying whether the second signature token is valid; if it is verified that the second signature token is invalid, sending a message of second signature token failed authentication to the user equipment and a service network to notify the user equipment that the second signature token is invalid; and if it is verified that the second signature token is valid, performing an attach processing on the user equipment using the second PSMI instead of the first PMSI.

For example, when failing to authenticate the signature token ACKTN, the home network generates a PMSI_next_new and sends the PMSI_next_new to the user equipment for signature authentication once more to get an ACKTN_new. Once the home network succeeds in authenticating the ACKTN_new, it will set the PMSI to be PMSI_next_new, while the user equipment will also set the PMSI to be PMSI_next_new. If the authentication is failed, the home network will send the message that the re-authentication of ACKTN is failed to the user equipment and the service network, and the service network and the home network will consider the user equipment as an invalid user and will reject the attach request re-sent by the user equipment; and the user equipment will consider the home network to be invalid and not initiate an attach request again.

In the embodiments of the present disclosure, before receiving the confirmation message sent by the user equipment, the method further includes: receiving an attach request sent by the user equipment, the attach request carrying a first PMSI which includes a user data center identification; generating an encrypted first PMSI by a user data center corresponding to the user data center identification; and sending the encrypted first PMSI to the user equipment, the encrypted first PMSI being used to generate the first signature token. Through the steps described above, the corresponding user data center can be found according to the user data center identification, and the problem that the home network can't find the corresponding user data center when the PMSI identification is attached in case that there are a plurality of user data centers can be solved.

In the embodiments of the present disclosure, before receiving the confirmation message sent by the user equipment, the method further includes: obtaining the PMSI by means of hashing an International Mobile Subscriber Identification number (IMSI) using a hash function. Through the steps described above, the loss of PMSI is avoided when failures happen in the home network, making the home network work properly.

In the embodiments of the present disclosure, receiving the confirmation message sent by the user equipment includes: receiving a location update request sent by a service network, the location update request carrying the first signature token forwarded to the service network by the user equipment. For example, the user equipment obtains the PMSI_next from the user authentication message, performs a signature operation on the PMSI_next to obtain a signature token ACKTN, and returns a user authentication response message to the service network, the message carrying a signature token ACKTN, and the service network sends a location update request to the home network, the message carrying a signature authentication token ACKTN, and the home network authenticates whether the ACKTN is valid and confirm the validity of the PMSI_next, completes the attach request message to the user equipment through the service network, and then the user equipment determines the validity of the PMSI_next, and replaces the original PMSI with the PMSI_next. Through the steps described above, the first signature token can still be received when the confirmation message carrying the first signature token cannot be received, and it is guaranteed that the PMSIs of the user equipment and the home network are out of synchronization.

In order to facilitate understanding of the embodiments described above, the following detailed explanations are given.

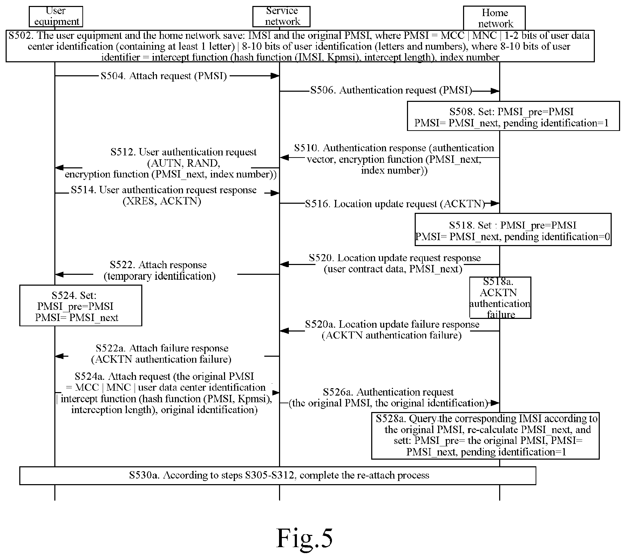

Fig. 5 is a schematic diagram of a flow of an International Mobile Subscriber Identification Number for protecting the user's privacy and a schematic diagram of a flow of processing failure of signature authentication according to the embodiments of the present disclosure. As shown in Fig. 5, the flow includes the following steps.

In S502, the user equipment and the home network maintain: IMSI and the original PMSI, where the original PMSI = MCC | MNC | 1-2 bits of user data center identification (containing at least 1 letter) | 8-10 bits of user identification (letters and numbers), where 8-10 bits of user identifier = intercept function (hash function (IMSI, Kpmsi), intercept length), where the intercept length is 8-10.

In S504, the user equipment sends an original attach request message carrying PMSI to the service network 1.

In S506, the service network queries the corresponding home network according to the MCC and the MNC of the PMSI, and queries the user data center corresponding to the home network according to the user data center identification, and sends a message of authentication request carrying the PMSI to the home network user data center.

In S508, the home network user data center finds the corresponding IMSI according to the PMSI, generates a corresponding security vector, and then generates a next attached PMSI_next, where the PMSI_next=MCC|MNC| user data center identification| intercept function (hash function (Kpmsi, PMSI), n), where Kpmsi is a hash key, and *n* is the interception length. Since PMSI_next may be the same as a PMSI of other user equipment, the hash number is added as the index number, the index number is counted from 0, and it is set that: PMSI_pre=PMSI, PMSI=PMSI_next, pending identification=1, where pending identification=1 means the PMSI is invalid while the PMSI_pre is valid currently.

In S510, the home network user data center sends an authentication response message to the service network, the message carrying a security vector and an encrypted PMSI next, where the encrypted PMSI_next=encryption function (PMSI_next|index number, K1), K1 is the encryption key K1 (K1=key generation function (Kpmsi, RAND)) for encrypting the PMSI_next by the home network, and RAND is a random number in the authentication vector.

In S512, the service network sends a user authentication request message to the user equipment, the message carrying an authentication token (AUTN) in the authentication vector for the user equipment to authenticate the network, and the message also carrying a random number RAND and an encrypted PMSI next.

In S514, after the user equipment succeeds in AUTN authentication, it acquires K1 in the same way as the home network does, decrypts the encrypted PMSI next, and calculates the PMSI next using the K2 signature, the signature token ACKTN=signature function (PMSI_next | index number, K2), where K2=key generating function (Kpmsi, signature authentication K), where the signature authentication K is also stored in the user equipment and in the home network individually, and the user equipment sends a user authentication succeed response message carrying ACKTN and XRES to the service network.

In S516, the service network compares the received XRES with the XRES in the security vector; if the two XRESs are equal, the authentication of the user equipment succeeds, and the service network sends a message of location update request carrying ACKTN to the home network.

In S518, the home network uses the same calculation method as the user equipment does to verify the validity of the ACKTN signature token, and it is set that PMSI_pre=PMSI, PMSI= PMSI next, pending identification=0, where pending identification=0 means the PMSI is valid.

In S520, the home network returns a response message of the location update to the service network, the message carrying user contract data and the PMSI next.

In S522, the service network saves the user contract data and the PMSI next and returns an attach response succeed message to the user equipment.

In S524, the user equipment device sets: PMSI_pre=PMSI, PMSI= PMSI next, and the user equipment registers with PMSI if it needs to register with PMSI next time.

The above is a process in which the user equipment uses the PMSI to successfully attach, and the following is a process in the case that the signature authentication ACKTN of the home network fails.

In S518a, authentication ACKTN of the home network fails.

In S520a, the home network returns a response message of the location update failure to the service network, the message carrying a reason value of the ACKTN authentication failure.

In S522a, the home network returns a response message of the attach failure to the user equipment, the message carrying a reason value of the ACKTN authentication failure.

In S524a, the user equipment obtains the original PMSI according to the reason value of the ACKTN authentication failure, or re-calculate the original PMSI, where the original PMSI = MCC | MNC | user data center identification | 8-10 bits of user identification | intercept function (hash function (Kpmsi, PMSI), interception length), and the user equipment initiates an attach message to the service network, the message carrying the original PMSI and the original identification.

In S526a, the service network queries the corresponding home network according to the MCC and MNC of the original PMSI, queries the user data center corresponding to the home network according to the user data center identification, and sends an authentication request message to the home network user data center, the message carrying the original PMSI and the original identification.

In S528a, the home network user data center finds the corresponding IMSI according to the original identification and the original PMSI, generates a corresponding security vector, and re-calculates an attached PMSI_next, where the PMSI_next=MCC|MNC| user data center identification| intercept function (hash function (Kpmsi, PMSI), n), where Kpmsi is a hash key, and *n* is the interception length. Since PMSI_next may be the same as a PMSI of other user equipment, the hash number is added as the index number, the index number is counted from 0, and it is set: PMSI_pre=original PMSI, PMSI=PMSI_next, pending identification=1, where pending identification=1 means the PMSI is invalid while the PMSI_pre is valid for the moment.

In S530a, the re-attach process is completed according to steps S505-S512, in step S512, PMSI_pre=the original PMSI while other descriptions are the same.

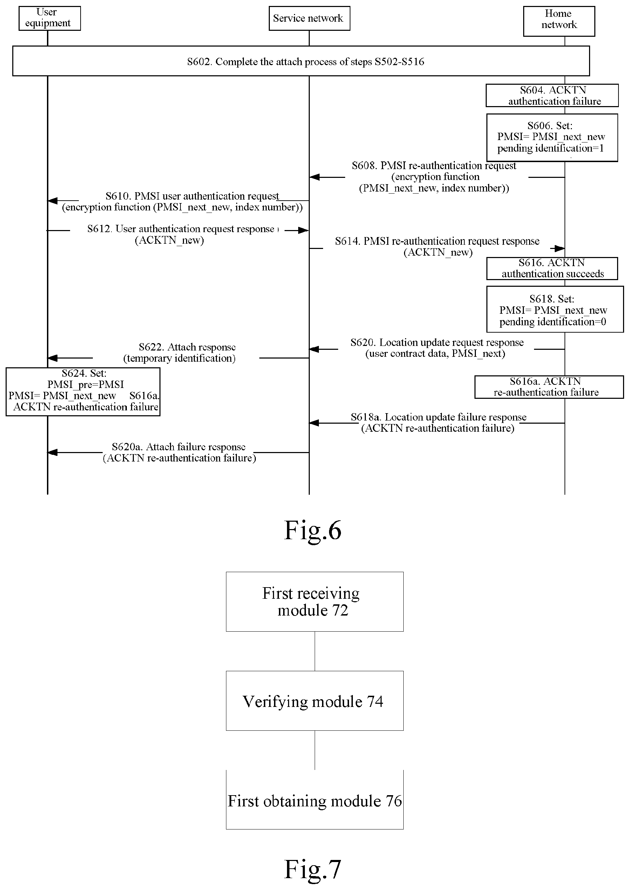

Fig. 6 is a schematic diagram of a flow of an International Mobile Subscriber Identification Number for protecting the user's privacy and processing failure of signature authentication according to the embodiments of the present disclosure. As shown in Fig. 6, the flow includes the following steps.

In S602, the attach process is performed according to steps S502-S516.

In S604, the authentication ACKTN of the home network fails.

In S606, a new PMSI_next_new is generated, where the PMSI_next_new=MCC|MNC| user data center identification| intercept function (hash function (Kpmsi, PMSI), n), with settings: PMSI=PMSI_next_new, pending identification=1, where pending identification=1 means the PMSI is invalid while the PMSI_pre is valid at present.

In S608, the home network sends a message of PMSI re-authentication request to the service network, the message carrying an encrypted PMSI_next_new, where the encrypted PMSI_next=encryption function (PMSI_next_new|index number, K1), where K1 is the encryption key K1 (K1=key generation function (Kpmsi, RAND)) to the PMSI_next encrypted by the home network, where RAND is a random number in the authentication vector.

In S610, the service network sends a message of PMSI user re-authentication request to the user equipment, the message carrying an encrypted PMSI_next_new.

In S612, the user equipment acquires K1 in the same way as the home network, decrypts the encrypted PMSI_next_new, and calculates the PMSI_next_new using the K2 signature, the signature token ACKTN=signature function (PMSI next new | index number, K2), where K2=key generating function (Kpmsi, signature authentication K), where the signature authentication K is also stored in the user equipment and in the home network individually, and the user equipment sends a PMSI user re-authentication response message carrying ACKTN_new to the service network.

In S614, the service network returns a response message of the PMSI re-authentication request to the home network, the message carrying the ACKTN_new.

In S616, the home network uses the same calculation method as the user equipment to verify the validity of the ACKTN signature token.

In S618, the home network sets: PMSI=PMSI_next_new, pending identification=0, where pending identification=0 means the PMSI is valid.

In S620, the home network returns a response message of the location update to the service network, the message carrying user contract data and the PMSI_next_new.

In S622, the service network saves the user contract data and the PMSI next new, and returns an attach response succeed message to the user equipment.

In S624, the user equipment sets: PMSI_pre=PMSI, PMSI= PMSI_next_new, and the user equipment registers with PMSI if it needs to register with PMSI next time.

The above is a process in which the ACKTN new signature is authenticated as valid, and the following is a process in which the home network signature authentication ACKTN_new fails.

In S616a, the authentication ACKTN new of the home network fails.

In S618a, the home network returns a response message of the location update failure to the service network, the message carrying the value of the reason for the ACKTN re-authentication failure.

In S620a, the service network returns a response message of the attach failure to the user equipment, the message carrying the value of the reason for the ACKTN re-authentication failure, and the user equipment determines that the home network is an illegal network and does not register any more, while the service network and the home network determine that the user equipment is an illegal user and reject all non-emergency service requests.

Through the description of the above embodiments, those skilled in the art can clearly understand that the method according to the foregoing embodiment can be implemented by means of software with a necessary general hardware platform, and can also be implemented by means of hardware, but in many cases the former is a better implementation. Based on such understanding, the technical solution in essence or the portion contributing to the related art of the embodiments of the present disclosure may be embodied in the form of a software product, which is stored in a storage medium, such as a Read-Only Memory (ROM)/Random Access Memory (RAM), a magnetic disc and an optical disc, the storage medium includes a plurality of instructions for enabling a terminal device (may be a mobile phone, a computer, a server, or a network device, etc.,) to perform the methods described in various embodiments of the present disclosure.

### Second embodiment

The present embodiment provides a network access authentication processing device, which is used to implement the above embodiments and preferred embodiments, and the description which has been given will be omitted. As used below, the term "module" may implement a combination of software and/or hardware of a predetermined function. Although the devices described in the following embodiments are preferably implemented in software, hardware or a combination of software and hardware is also possible and contemplated.

Fig. 7 is a structure diagram of the network access authentication processing device according to the embodiments of the present disclosure; as shown in Fig. 7, the device includes: a first receiving module 72, a verifying module 74, and a first obtaining module 76.

The first receiving module 72 is configured to receive a confirmation message sent by user equipment, the confirmation message carrying a first signature token generated by the user equipment according to a first privacy enhanced mobile subscriber identifier (PMSI).

The verifying module 74 is connected to the first receiving module 72, and is configured to verify whether the first signature token is valid.

The first obtaining module 76 is connected to the first receiving module 72, and is configured to obtain a PMSI to perform network access authentication on the user equipment if it is verified that the first signature token is invalid.

In the embodiments of the present disclosure, the first obtaining module is further configured to send a message of first signature token failed authentication to the user equipment, and notify the user equipment to re-initiate an attach request; and re-obtain the first PMSI based on the attach request to perform network access authentication on the user equipment.

In the embodiments of the present disclosure, the first obtaining module is further configured to generate a second PSMI according to the first PMSI and send the second PSMI to the user equipment; based on a feedback from the user equipment, obtain a second signature token generated by the user equipment according to the second PSMI; and re-perform network access authentication on the user equipment via verifying whether the second signature token is valid.

In the embodiments of the present disclosure, the first obtaining module is further configured to verify whether the second signature token is valid; if the second signature token is invalid, send a message of the second signature token failed authentication to the user equipment and a service network, and notify the user equipment that the second signature token is invalid; and if the second signature token is valid, perform attach processing on the user equipment using the second PSMI instead of the first PMSI.

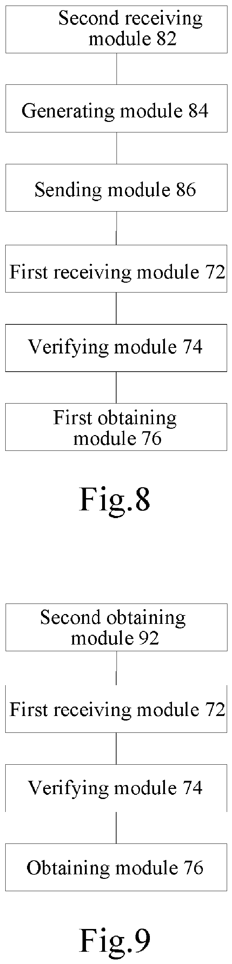

Fig. 8 is a preferred structure diagram of the network access authentication processing device according to the embodiments of the present disclosure; as shown in Fig. 8, in addition to all the modules shown in Fig. 7, the device also includes:
a second receiving module 82, configured to receive an attach request sent by the user equipment, the attach request carrying a first PMSI which includes a user data center identification;
a generating module 84, connected to the second receiving module 82, and configured to generate an encrypted first PMSI by the user data center corresponding to the user data center identification; and
a sending module 86, connected to the generating module 84, and configured to send the encrypted first PMSI to the user equipment, the encrypted first PMSI being used to generate the first signature token.

Fig. 9 is a preferred structure diagram of the network access authentication processing device according to the embodiments of the present disclosure; as shown in Fig. 8, in addition to all the modules shown in Fig. 7 and Fig. 8, the device also includes:
a second obtaining module 92, configured to obtain the PMSI by means of hashing an international mobile subscriber identification number (IMSI) using hash function.

In the embodiments of the present disclosure, the first receiving module is further configured to receive location update request sent by a service network, the location update request carrying the first signature token forwarded to the service network by the user equipment.

It should be noted that each of the above modules may be implemented by software or hardware. For the latter, the foregoing may be implemented by, but not limited to, the following way: the foregoing modules are all set in the same processor; or, the above modules are set in different processors in the form of any combination.

### Third embodiment

In the embodiments of the present disclosure, there is provided a storage medium. In the present embodiment, the storage medium is configured to store the program code which executes the following steps:
S1, receiving a confirmation message sent by user equipment, the confirmation message carrying a first signature token generated by the user equipment according to a first privacy enhanced mobile subscriber identifier (PMSI);
S2, verifying whether the first signature token is valid; and
S3, if the first signature token is invalid, obtaining a PMSI to perform network access authentication on the user equipment.

In the embodiments of the present disclosure, the storage medium is further configured to store the program code which executes the following steps: obtaining the PMSI to perform network access authentication on the user equipment includes:
S1, sending a message of a first signature token failed authentication to the user equipment, and notifying the user equipment to re-initiate an attach request; and
S2, re-obtaining the first PMSI according to the attach request to perform network access authentication on the user equipment.

In the embodiments of the present disclosure, the storage medium is further configured to store the program code which executes the following steps: obtaining the PMSI to perform network access authentication on the user equipment includes:
S1, generating a second PSMI according to the first PMSI and sending the second PSMI to the user equipment;
S2, based on a feedback from the user equipment, obtaining a second signature token generated by the user equipment according to the second PSMI; and
S3, re-performing network access authentication on the user equipment via verifying whether the second signature token is valid.

In the embodiments of the present disclosure, the storage medium is further configured to store the program code which executes the following steps: re-performing network access authentication on the user equipment via verifying whether the second signature token is valid includes:
S1, verifying whether the second signature token is valid;
S2, if the second signature token is invalid, sending a message of the second signature token failed authentication to the user equipment and a service network, and notifying the user equipment that the second signature token is invalid; and
S3, if the second signature token is valid, performing attach processing on the user equipment using the second PSMI instead of the first PMSI.

In the embodiments of the present disclosure, the storage medium is further configured to store the program code which executes the following steps: before receiving the confirmation message sent by the user equipment, further including:
S1, receiving an attach request sent by the user equipment, the attach request carrying a first PMSI which includes a user data center identification;
S2, generating an encrypted first PMSI by the user data center corresponding to the user data center identification; and
S3, sending the encrypted first PMSI to the user equipment, the encrypted first PMSI being used to generate the first signature token.

In the embodiments of the present disclosure, the storage medium is further configured to store the program code which executes the following steps: before receiving the confirmation message sent by the user equipment, further including:
S1, obtaining the PMSI by means of hashing an international mobile subscriber identification number (IMSI) using hash function.

In the embodiments of the present disclosure, the storage medium is further configured to store the program code which executes the following steps: receiving a confirmation message sent by a user equipment, including:
S1, receiving location update request sent by a service network, wherein the location update request carrying the first signature token forwarded to the service network by the user equipment.

Optionally, in the present embodiment, the storage medium may include, but is not limited to, a U Disk, a ROM/RAM, a mobile hard disk drive, a magnetic disc, an optical disc or other mediums that can store program codes.

Optionally, in the present embodiment, according to the stored program codes in the storage medium, the processor executes: receiving a confirmation message sent by a user equipment, the confirmation message carrying a first signature token generated by the user equipment according to a first privacy enhanced mobile subscriber identifier (PMSI); verifying whether the first signature token is valid; and if the first signature token is invalid, obtaining a PMSI to perform network access authentication on the user equipment.

Optionally, in the present embodiment, according to the stored program codes in the storage medium, the processor executes: obtaining the PMSI to perform network access authentication on the user equipment includes: sending a message of a first signature token failed authentication to the user equipment, and notifying the user equipment to re-initiate an attach request; and re-obtaining the first PMSI according to the attach request to perform network access authentication on the user equipment.

Optionally, in the present embodiment, according to the stored program codes in the storage medium, the processor executes: obtaining the PMSI to perform network access authentication on the user equipment includes: generating a second PSMI according to the first PMSI and sending the second PSMI to the user equipment; based on the user equipment feedback, obtaining a second signature token generated by the user equipment according to the second PSMI; and re-performing network access authentication on the user equipment via verifying whether the second signature token is valid.

Optionally, in the present embodiment, according to the stored program codes in the storage medium, the processor executes: re-performing network access authentication on the user equipment via verifying whether the second signature token is valid incudes: verifying whether the second signature token is valid; if the second signature token is invalid, sending a message of the second signature token failed authentication to the user equipment and a service network, and notifying the user equipment that the second signature token is invalid; and if the second signature token is valid, performing attach processing on the user equipment using the second PSMI instead of the first PMSI.

Optionally, in the present embodiment, according to the stored program codes in the storage medium, the processor executes: before receiving the confirmation message sent by the user equipment, further including: receiving an attach request sent by the user equipment, the attach request carrying a first PMSI which includes a user data center identification; generating an encrypted first PMSI by the user data center corresponding to the user data center identification; and sending the encrypted first PMSI to the user equipment, the encrypted first PMSI being used to generate the first signature token.

Optionally, in the present embodiment, according to the stored program codes in the storage medium, the processor executes: before receiving a confirmation message sent by a user equipment, including: obtaining the PMSI by means of hashing an international mobile subscriber identification number (IMSI) using hash function.

Optionally, in the present embodiment, according to the stored program codes in the storage medium, the processor executes: receiving a confirmation message sent by a user equipment, including: receiving location update request sent by a service network, the location update request carrying the first signature token forwarded to the service network by the user equipment.

Optionally, the specific examples in the present embodiment may refer to the examples described in the foregoing embodiments and the optional embodiments, and details are omitted herein.

It will be apparent to those skilled in the art that the modules or steps of the above-described embodiments of the present disclosure may be implemented by a general computing device, which may be centralized on a single computing device or distributed across the network of multiple computing devices, and in the embodiments of the present invention, they may be implemented by program codes executable by the computing device, such that they may be stored in the storage device and executed by the computing device, and in some cases, the steps shown or described may be performed in a different order from that herein, or they may be separately fabricated into individual integrated circuit modules, or a plurality of the modules or steps may be implemented as a single integrated circuit module. Thus, the embodiments of the invention are not limited to any specific combination of hardware or software.

Those described above are merely preferred embodiments of the invention, but are not intended to limit the invention, and there may be various changes and variations to the embodiments of the present disclosure for those skilled in the art. Any change, equivalent substitution, and improvement made within the spirit and principle of the invention shall fall within the protection scope of the invention.

### INDUSTRIAL APPLICABILITY

In the network access authentication processing method provided by the embodiments of the present disclosure, a PMSI is obtained to perform network access authentication on the user equipment under the circumstance that the first signature token is illegitimate, that is, the signature authentication is failed, thereby the problem that a network access process in the related art does not provide a processing method in a home network to deal with failure of signature authentication can be solved.

The following items are preferred embodiments:
1. A network access authentication processing method, comprising:
   receiving a confirmation message sent by user equipment, the confirmation message carrying a first signature token generated by the user equipment according to a first Privacy enhanced Mobile Subscriber Identifier (PMSI);
   verifying whether the first signature token is valid; and
   when the first signature token is invalid, obtaining the PMSI to perform network access authentication on the user equipment.
2. The method according to item 1, wherein obtaining the PMSI to perform the network access authentication on the user equipment comprises:
   sending a message of first signature token failed authentication to the user equipment, and notifying the user equipment to re-initiate an attach request; and
   re-obtaining the first PMSI based on the attach request to perform the network access authentication on the user equipment.
3. The method according to item 1, wherein obtaining the PMSI to perform the network access authentication on the user equipment comprises:
   generating a second PSMI according to the first PMSI and sending the second PSMI to the user equipment;
   based on a feedback from the user equipment, obtaining a second signature token generated by the user equipment according to the second PSMI; and
   re-performing the network access authentication on the user equipment via verifying whether the second signature token is valid.
4. The method according to item 3, wherein re-performing the network access authentication on the user equipment via verifying whether the second signature token is valid comprises:
   verifying whether the second signature token is valid;
   if the second signature token is invalid, sending a message of second signature token failed authentication to the user equipment and a service network, and notifying the user equipment that the second signature token is invalid; and
   if the second signature token is valid, performing attach processing on the user equipment using the second PSMI instead of the first PMSI.
5. The method according to item 1, wherein before receiving the confirmation message sent by the user equipment, the method further comprises:
   receiving an attach request sent by the user equipment, the attach request carrying the first PMSI and the first PMSI comprising a user data center identification;
   generating an encrypted first PMSI by a user data center corresponding to the user data center identification; and
   sending the encrypted first PMSI to the user equipment, wherein the encrypted first PMSI is used to generate the first signature token.
6. The method according to item 1, wherein before receiving the confirmation message sent by the user equipment, the method further comprises:
   obtaining the PMSI by means of hashing an International Mobile Subscriber Identification number (IMSI) using a hash function.
7. The method according to any one of items 1 to 6, wherein receiving the confirmation message sent by the user equipment, comprises:
   receiving a location update request sent by a service network, the location update request carrying the first signature token forwarded to the service network by the user equipment.
8. A network access authentication processing device, comprising:
   a first receiving module configured to receive a confirmation message sent by user equipment, the confirmation message carrying a first signature token generated by the user equipment according to a first Privacy enhanced Mobile Subscriber Identifier (PMSI);
   a verifying module configured to verify whether the first signature token is valid; and
   a first obtaining module configured to, when the first signature token is invalid, obtain the PMSI to perform network access authentication on the user equipment.
9. The device according to item 8, wherein the first obtaining module is further configured to send a message of first signature token failed authentication to the user equipment, and notify the user equipment to re-initiate an attach request; and re-obtain the first PMSI based on the attach request to perform the network access authentication on the user equipment.
10. The device according to item 8, wherein the first obtaining module is further configured to generate a second PSMI according to the first PMSI and send the second PSMI to the user equipment; based on a feedback from the user equipment, obtain a second signature token generated by the user equipment according to the second PSMI; and re-perform the network access authentication on the user equipment via verifying whether the second signature token is valid.
11. The device according to item 10, wherein the first obtaining module is further configured to verify whether the second signature token is valid; if the second signature token is invalid, send a message of second signature token failed authentication to the user equipment and a service network, and notify the user equipment that the second signature token is invalid; and if the second signature token is valid, perform attach processing on the user equipment using the second PSMI instead of the first PMSI.
12. The device according to item 8, further comprising:
   a second receiving module configured to receive an attach request sent by the user equipment, the attach request carrying the first PMSI and the first PMSI comprising a user data center identification;
   a generating module configured to generate an encrypted first PMSI by a user data center corresponding to the user data center identification; and
   a sending module configured to send the encrypted first PMSI to the user equipment, wherein the encrypted first PMSI is used to generate the first signature token.
13. The device according to item 8, further comprising:
   a second obtaining module configured to obtain the PMSI by means of hashing an International Mobile Subscriber Identification number (IMSI) using a hash function.
14. The device according to any one of items 8 to 13, wherein the first receiving module is further configured to receive a location update request sent by a service network, the location update request carrying the first signature token forwarded to the service network by the user equipment.
15. A storage medium, comprising a stored program, wherein the program executes the method according to any one of items 1 to 7 during running.

## Claims

1. A method for wireless communication, comprising:
receiving, by a service network, an attach request sent by a user equipment, the attach request carrying a privacy enhanced subscription identifier;
requesting, by the service network, authentication information from a home network, wherein the home network is determined in part based on a Mobile Country Code, MCC, and Mobile Network Code, MNC, carried the privacy enhanced subscription identifier; and
receiving, by the service network, the authentication information provided by the user data center in the home network according to an identifier identifying the user data center in the privacy enhanced subscription identifier.

2. The method of claim 1, wherein requesting the authentication information comprises:
sending, by the service network, a request message to the home network carry the privacy enhanced subscription identifier.

3. A method for wireless communication, comprising:
receiving, by a home network, a request message from a service network requesting authentication information, wherein the request message carries a privacy enhanced subscription identifier, and wherein the home network is identified in part based on a Mobile Country Code, MCC, and a Mobile Network Code, MNC, carried in the privacy enhanced subscription identifier; and
transmitting, by the home network to the service network, the authentication information provided by a user data center in the home network according to an identifier identifying the user data center in the privacy enhanced subscription identifier.

4. The method of claim 3, further comprising:
determining, by the home network, an international mobile subscriber identification number, IMSI, based on the privacy enhanced subscription identifier.

5. The method of any of claims 1 to 4, wherein the service network comprises an access network and a core network.

6. The method of any of claims 1 to 4, wherein the home network comprises an authentication certification center and the user data center.

7. A device for wireless communication, comprising:
a processor; and
a memory including processor executable code, wherein the processor executable code upon execution by the processor configures the processor to:
receive an attach request sent by the user equipment, the attach request carrying a privacy enhanced subscription identifier;
request authentication information from a home network, wherein the home network is determined in part based on a Mobile Country Code, MCC, and a Mobile Network Code, MNC, carried in the privacy enhanced subscription identifier; and
receive the authentication information provided by a user data center in the home network according to an identifier identifying the user data center in the privacy enhanced subscription identifier.

8. The device of claim 7, wherein the processor is configured to request the authentication information based on:
sending a request message to the home network carry the privacy enhanced subscription identifier.

9. A device for wireless communication, comprising:
a processor; and
a memory including processor executable code, wherein the processor executable code upon execution by the processor configures the processor to:
receive a request message from a service network requesting authentication information, wherein the request message carries a privacy enhanced subscription identifier, and wherein the home network is identified in part based on a Mobile Country Code, MCC, and a Mobile Network Code, MNC, carried in the privacy enhanced subscription identifier; and
transmit, to the service network, the authentication information provided by a user data center in the home network according to an identifier identifying the user data center in the privacy enhanced subscription identifier.

10. The device of claim 9, wherein the processor is configured to:
determine an international mobile subscriber identification number, IMSI, based on the privacy enhanced subscription identifier.

11. The device of any of claims 7 to 10, wherein the service network comprises an access network and a core network.

12. The device of any of claims 7 to 10, wherein the home network comprises an authentication certification center and the user data center.

13. A computer program product comprising a computer-readable program medium code stored thereupon, the code, when executed by a processor, causing the processor to implement a method of any of claims 1 to 6.
